# EUROPEAN PATENT SPECIFICATION

(11) **EP 4 545 303 B1**
(45) Date of publication and mention of the grant of the patent: **25.11.2026**
(21) Application number: 24207755.0
(22) Date of filing: 21.10.2024
(51) Int. Cl.: B33Y 80/00, F28D 9/00, F28F 3/02, F28F 3/04, F28F 21/08

(54) **HEAT EXCHANGER WITH INTERNAL CROSS FLOW FINS**
WÄRMETAUSCHER MIT INTERNEN QUERSTROMRIPPEN
ECHANGEUR DE CHALEUR À AILETTES À FLUX TRANSVERSAL INTERNES

(30) Priority: 23.10.2023 US 202318491913
(43) Date of publication of application: 30.04.2025
(73) Proprietor: Hamilton Sundstrand Corporation, Charlotte, NC 28217-4578 (US)
(72) Inventor: KILCHYK, Viktor, Lancaster, NY (US); ARMY, Donald E., Enfield, CT (US)
(74) Representative: Dehns

(56) References cited:
- US-A1- 2015 137 412
- US-A1- 2018 015 539
- US-A1- 2019 301 816
- US-B2- 10 845 132
- US-B2- 11 686 537

## Description

### BACKGROUND

Exemplary embodiments pertain to the art of heat exchangers and in particular to the construction of heat exchanger fin disposed between opposing heat exchanger plates.

Heat exchangers are utilized in a variety of applications, such as cooling of engines or motors, climate control (heating, ventilation and air conditioning systems) or the like. Utilizing additive manufacturing techniques, such as 3D printing or the like, in manufacturing heat exchangers allows for the manufacture of shapes and configurations of heat exchangers not easily achieved via conventional manufacturing operations.

Utilizing additive manufacturing processes, however, imposes certain geometrical constraints on the heat exchanger configuration. For instance, due to 3D printing constraints, the geometry is limited in maximum horizontal angle to about 45 degrees. This results in longer transition from a header to the high surface area sections of a heat exchanger body, thus lowering overall effectiveness of the heat exchanger (HX), or alternatively requiring additional supports to be incorporated to the structure during manufacture. The additional supports may be difficult to access and remove in the locations inside of the unit once manufacture of the heat exchanger is completed. Additive manufacturing processes for heat exchangers are disclosed in US 2015/137412 A1, US 2018/015539 A1, US 2019/301816 A1, US 10 845 132 B2 and US 11 686 537 B2. US2015/137412 discloses a heat exchanger according to the preamble of claim 1.

### BRIEF DESCRIPTION

In one aspect, a heat exchanger is provided as defined by claim 1.

In embodiments a fin thickness of the plurality of fins varies along a fin height direction.

In embodiments a fin of the plurality of fins is formed with one or more porous areas internal to the fin.

In embodiments the fin includes one or more perforations extending into the porous area to define a secondary pathway through the fin.

In embodiments the plurality of fins are arranged in a plurality of rows. Each row extends across a flow direction of the second fluid through the plurality of second pathways.

In embodiments one or more of a fin spacing and a fin thickness is varied between a first row of the plurality of rows and a second row of the plurality of rows.

In embodiments a turbulator is positioned between adjacent fins of the plurality of fins.

In embodiments the heat exchanger plates are formed from a sheet metal material.

In embodiments the plurality of heat exchanger plates define a plurality of heat exchanger layers along the stacking axis, and a first heat exchanger layer of the plurality of heat exchanger layers includes the plurality of fins formed from one or more additive manufacturing processes. A second heat exchanger layer of the plurality of heat exchanger layers includes a plurality of fins formed not from one or more additive manufacturing processes.

In embodiments the heat exchanger is one of a cross-flow heat exchanger, a counterflow heat exchanger or a parallel flow heat exchanger.

In another aspect, a method of forming a heat exchanger is provided as defined by claim 9.

In embodiments a fin thickness of the plurality of fins is varied along a fin height direction.

In embodiments a fin of the plurality of fins is formed with one or more porous areas internal to the fin.

In embodiments the fin includes one or more perforations extending into the porous area to define a secondary pathway through the fin.

In embodiments the plurality of fins are arranged in a plurality of rows. Each row extends across a flow direction of the second fluid through the plurality of second pathways.

In embodiments one or more of a fin spacing and a fin thickness is varied between a first row of the plurality of rows and a second row of the plurality of rows.

In embodiments the heat exchanger plates are formed from a sheet metal material.

In embodiments the one or more additive manufacturing processes includes 3D printing.

### BRIEF DESCRIPTION OF THE DRAWINGS

The following descriptions should not be considered limiting in any way. With reference to the accompanying drawings, like elements are numbered alike:
FIG. 1 is a partial cross-sectional illustration of an embodiment of a heat exchanger;
FIG. 2 is a schematic illustration of an exemplary embodiment of a fin structure of a heat exchanger;
FIG. 3a is a schematic illustration of another exemplary embodiment of a fin structure of a heat exchanger;
FIG. 3b is a schematic illustration of yet another exemplary embodiment of a fin structure of a heat exchanger;
FIG. 3c is a schematic illustration of still another exemplary embodiment of a fin structure of a heat exchanger;
FIG. 3d is a schematic illustration of another exemplary embodiment of a fin structure of a heat exchanger;
FIG. 4a is a schematic illustration of an exemplary fin arrangement of a heat exchanger;
FIG. 4b is a schematic illustration of another exemplary fin arrangement of a heat exchanger; and
FIG. 5 is a schematic illustration of still another exemplary embodiment of a fin structure of a heat exchanger.

### DETAILED DESCRIPTION

A detailed description of one or more embodiments of the disclosed apparatus and method are presented herein by way of exemplification and not limitation with reference to the Figures.

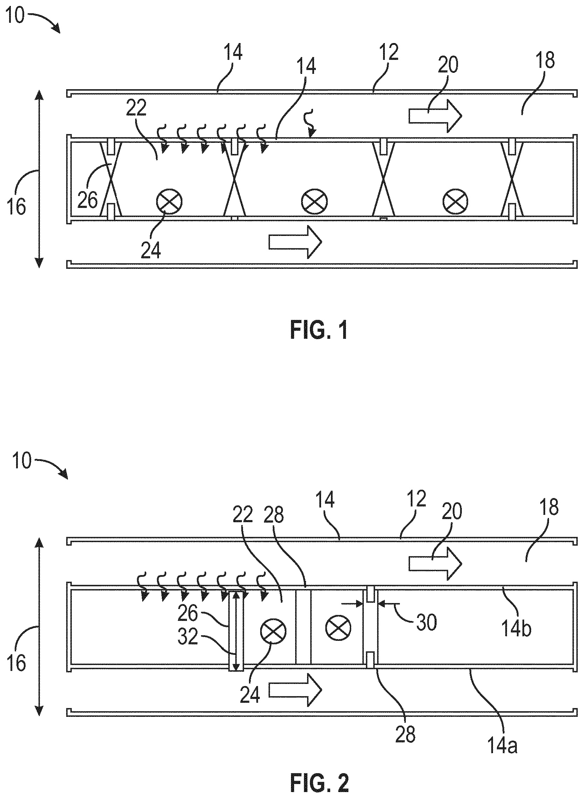

Referring now to FIG. 1, illustrated is a partial cross-section view of an embodiment of a heat exchanger 10. The heat exchanger 10 includes a heat exchanger body 12 having a plurality of heat exchanger plates 14 (shown as 14a and 14b) spaced apart and stacked along a stacking axis 16 defining a plurality of heat exchanger layers along the stacking axis 16. The stack of heat exchanger plates 14 defines one or more first pathways 18 through which a first fluid 20 is directed. In some embodiments the first fluid 20 is a relatively hot gas. Second pathways 22 are located between adjacent first pathways 18 along the stacking axis 16. A second fluid 24 is directed through the second pathways 22, and in some embodiments may be a relatively cold gas. In the embodiment of FIG. 1, the first fluid 20 is directed in a first direction and the second fluid 24 is directed in a second direction substantially perpendicular to the first direction so that the heat exchanger 10 is a crossflow heat exchanger. It is to be appreciated that this configuration is merely exemplary and that the present disclosure may be utilized in other heat exchanger 10, such as counterflow heat exchangers 10 where the second direction is opposite the first direction, or parallel-flow heat exchangers where the first direction is the same as the second direction.

To enhance performance of the heat exchanger 10, fins 26 or other features extend at least partially across the second pathways 22. While the fins 26 are illustrated herein to be in the second pathways 22, one skilled in the art will appreciate that fins 26 may alternatively or additionally be located in the first pathways 18. The fins 26 act to increase turbulence in the fluid flow and also to increase an effective heat exchange surface, thereby improving a heat transfer rate of the heat exchanger 10.

The heat exchanger plates 14 are, for example, sheet metal plates or plates formed from other materials having the desired heat transfer properties for heat exchanger 10 performance. The fins 26 are formed by one or more additive manufacturing processes, such as 3D printing. In some embodiments, the fins 26 are formed by additive manufacturing in place on the heat exchanger plates 14 prior to stacking of the heat exchanger plates 14. The heat exchanger plates 14 include plate openings 28 or perforations therein, with the fins 26 partially extending into the plate openings 28 to adhere the fins 26 to the heat exchanger plates 14. While in some embodiments, all of the fins 26 are formed from additive manufacturing processes, in some embodiments the heat exchanger 10 may include a combination of additively-manufacture fins and traditionally manufactured fins. For example, additively-manufactured fins 26 and traditionally manufactured fins may be utilized in alternating layers of the heat exchanger 10.

Such hybrid construction of the heat exchanger 10 allows for different and varying configurations of fins 26 in the layers of the heat exchanger 10. In one embodiment, in FIG. 2, the fins 26 may be simply rectangular in cross-section with a constant fin thickness 30 along a fin height 32 extending between the adjacent heat exchanger plates 14.

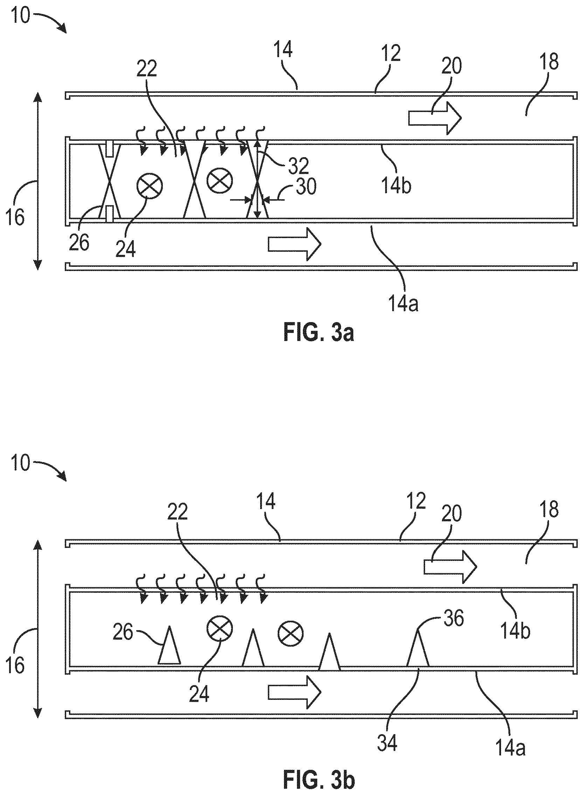

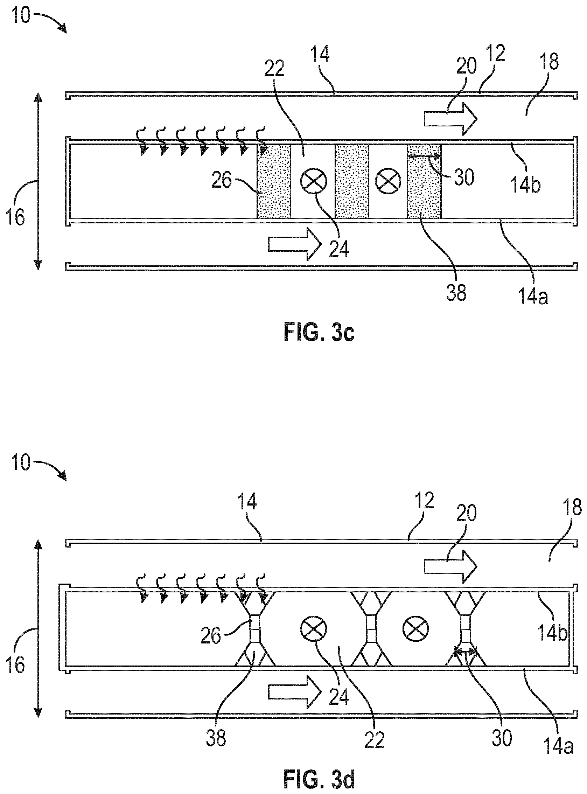

Other exemplary configurations of fins 26 are illustrated in FIGs. 3a -3d. In the embodiment of FIG. 3a, the fin 26 extends from a first heat exchanger plate 14a to a second heat exchange plate 14b, and the fin thickness 30 varies with distance from the heat exchanger plates 14a, 14b. In some embodiments, such as illustrated in FIG. 3a, the fin 26 decreases in fin thickness 30 as distance from the heat exchanger plates 14a, 14b increases, resulting the fin 26 having, in the embodiment shown, a double triangular, or "bow-tie" shaped cross-section. In other embodiments, such as shown in FIG. 3b, the fin 26 extends only partially between the first heat exchanger plate 14a and the second heat exchanger plate 14b, from a fin base 34 to a fin tip 36. In such configurations, the fin thickness 30 may be constant along the fin height 32, while in other embodiments as shown in FIG. 3b, the fin thickness 30 may vary or taper from the fin base 34 to the fin tip 36. In other embodiments such as shown in FIG. 3c and 3d, the fins 26 may have internal porous areas 38, which improve heat transfer properties of the fins 26, while reducing weight. In the embodiment of FIG. 3c, the fin 26 having internal porous areas 38 has a uniform external cross-section, for example, a rectangular cross-section. In other embodiments, however, the fins 26 may have other external cross-sectional shapes, such that the overall fin thickness 30 is varied. The internal porous areas 38 may be uniform and constant, or alternatively may vary depending on the location of the porous area 38 in the fin 26. It is to be appreciated that the fin 26 structures illustrated in FIGs. 3a-3d and described herein are merely exemplary and one skilled in the art will readily appreciate that other fin 36 configurations may be utilized to provide the desired heat transfer performance of the heat exchanger 10.

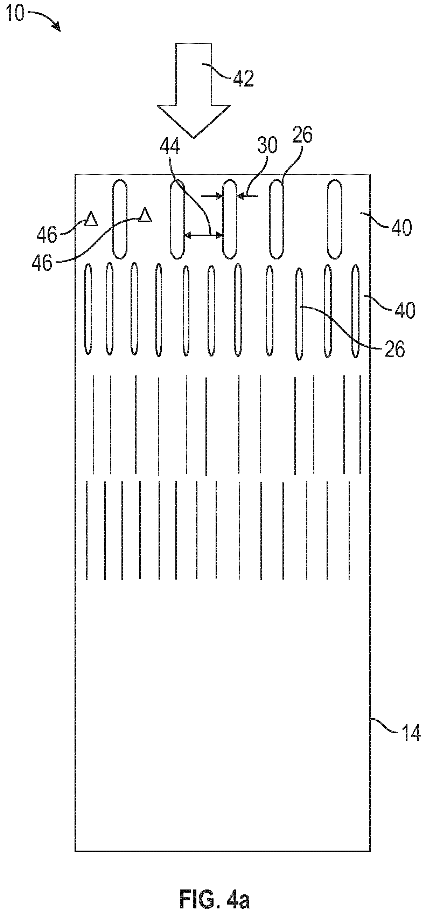

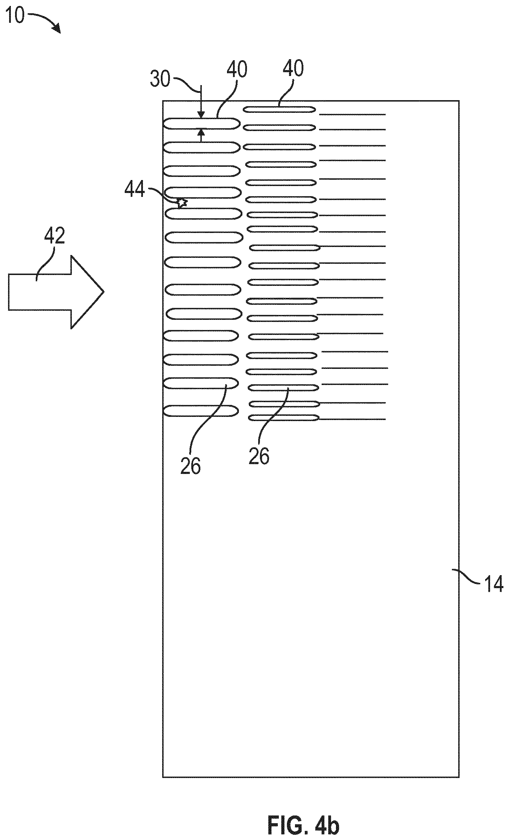

Forming the fins 26 via one or more additive manufacturing processes enables a variety of arrangements and distributions of fins 26 as illustrated in FIG. 4a and 4b. In each of the illustrated embodiments, the fins 26 are arranged in a plurality of fin rows 40, with each fin row 40 extending across a flow direction 42 and the fin rows 40 arrayed along the flow direction 42. In some embodiments, fins 26 of a particular fin row 40 have the same fin thickness 30 and/or fin spacing 44, while the fin thickness 30 and/or fin spacing 44 may vary by fin row 40. For example, a first fin row 40 may have a first fin spacing 44 and fins having a first fin thickness 30, while a second fin row 40 may have a second fin spacing 44 different from the first fin spacing 44, and fins having a second fin thickness 30 different from the first fin thickness 30. Additionally, in some embodiments, turbulators 46 may be positioned between adjacent fins 26 in selected fin rows 40.

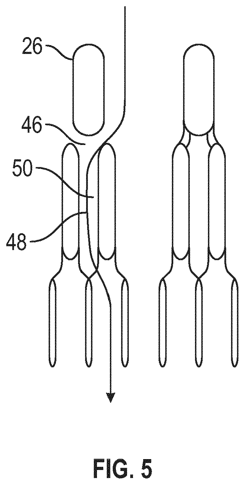

Referring now to FIG. 5, the fins 26 are in some embodiments formed with perforations formed therein to define secondary flow passages 48 through an interior 50 of the fins 26. This configuration further increases the heat transfer performance of the fins 26 and of the heat exchanger 10 overall.

Such hybrid construction of the heat exchanger 10, with heat exchanger plates 14 and fins 26 formed from one or more additive manufacturing processes extending between adjacent heat exchanger plates 14, improves thermal performance of the heat exchanger 10 while enabling a reduction in weight. Further, use of conventional heat exchanger plates 14 reduces pressure losses on the heat exchanger plates 14 due to low surface roughness of the heat exchanger plates 14. Further, the hybrid construction enables incorporation of advantageous aspects of both plate and additive manufacturing heat exchanger configurations while controlling cost of the heat exchanger 10.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims.

## Claims

1. A heat exchanger, comprising:
a plurality of heat exchanger plates (14a, 14b) stacked along a stacking axis defining a plurality of first pathways (18) through which a first fluid is directed; and
a plurality of fins (26) disposed between adjacent first pathways of the plurality of first pathways, the plurality of fins at least partially defining a plurality of second pathways (22) through which a second fluid is directed;
wherein the heat exchanger plates are formed from a sheet material; and
wherein the plurality of fins are formed from one or more additive manufacturing processes; the heat exchanger being **characterised by**
a plurality of plate openings (28) in the plurality of heat exchanger plates;
wherein a fin of the plurality of fins is formed extending into each of the plurality of plate openings to secure the plurality of fins to the heat exchanger plate.

2. The heat exchanger of claim 1, wherein a fin thickness of the plurality of fins varies along a fin height direction.

3. The heat exchanger of any preceding claim, wherein a fin of the plurality of fins is formed with one or more porous areas internal to the fin, and optionally wherein the fin includes one or more perforations extending into the porous area to define a secondary pathway through the fin.

4. The heat exchanger of any preceding claim, wherein the plurality of fins are arranged in a plurality of rows, each row extending across a flow direction of the second fluid through the plurality of second pathways.

5. The heat exchanger of claim 4, wherein one or more of a fin spacing and a fin thickness is varied between a first row of the plurality of rows and a second row of the plurality of rows.

6. The heat exchanger of any preceding claim, further comprising a turbulator (46) disposed between adjacent fins of the plurality of fins.

7. The heat exchanger of any preceding claim, wherein the heat exchanger plates are formed from a sheet metal material.

8. The heat exchanger of any preceding claim, wherein:
the plurality of heat exchanger plates define a plurality of heat exchanger layers along the stacking axis; and
wherein a first heat exchanger layer of the plurality of heat exchanger layers includes the plurality of fins formed from one or more additive manufacturing processes; and
wherein a second heat exchanger layer of the plurality of heat exchanger layers includes a plurality of fins formed not from one or more additive manufacturing processes.

9. A method of forming a heat exchanger, comprising:
stacking a plurality of heat exchanger plates (14a, 14b) along a stacking axis thereby defining a plurality of first fluid pathways (18) through which a first fluid is directed;
positioning a plurality of fins (26) between adjacent first fluid pathways to at least partially define a plurality of second fluid pathways (22) through which a second fluid is directed;
wherein the heat exchanger plates are formed from a sheet material; and
wherein the plurality of fins are formed from one or more additive manufacturing processes; the method further comprising:
forming a plurality of plate openings (28) in the plurality of heat exchanger plates; and
forming a fin of the plurality of fins to extend into each of the plurality of plate openings to secure the plurality of fins to the heat exchanger plate.

10. The method of claim 9, further comprising varying a fin thickness of the plurality of fins along a fin height direction.

11. The method of claim 9 or 10, further comprising forming a fin of the plurality of fins with one or more porous areas internal to the fin, and optionally further comprising forming the fin including one or more perforations extending into the porous area to define a secondary pathway through the fin.

12. The method of any of claims 9 to 11, further comprising arranging the plurality of fins in a plurality of rows, each row extending across a flow direction of the second fluid through the plurality of second pathways, and optionally further comprising varying one or more of a fin spacing and a fin thickness between a first row of the plurality of rows and a second row of the plurality of rows.

13. The method of any of claims 9 to 12, wherein the one or more additive manufacturing processes includes 3D printing.

## Patentansprüche

1. Wärmetauscher, umfassend:
eine Mehrzahl von Wärmetauscherplatten (14a, 14b), die entlang einer Stapelachse gestapelt sind und eine Mehrzahl von ersten Pfaden (18) definieren, durch die ein erstes Fluid geleitet wird; und
eine Mehrzahl von Rippen (26), die zwischen benachbarten ersten Pfaden der Mehrzahl von ersten Pfaden angeordnet sind, wobei die Mehrzahl von Rippen zumindest teilweise eine Mehrzahl von zweiten Pfaden (22) definiert, durch die ein zweites Fluid geleitet wird;
wobei die Wärmetauscherplatten aus einem Flachmaterial ausgebildet sind; und
wobei die Mehrzahl von Rippen durch ein oder mehrere additive Fertigungsverfahren ausgebildet ist; wobei der Wärmetauscher **gekennzeichnet ist durch**
eine Mehrzahl von Plattenöffnungen (28) in der Mehrzahl von Wärmetauscherplatten;
wobei eine Rippe der Mehrzahl von Rippen so ausgebildet ist, dass sie sich in jede der Mehrzahl von Plattenöffnungen erstreckt, um die Mehrzahl von Rippen an der Wärmetauscherplatte zu befestigen.

2. Wärmetauscher nach Anspruch 1, wobei eine Rippendicke der Mehrzahl von Rippen entlang einer Rippenhöhenrichtung variiert.

3. Wärmetauscher nach einem der vorhergehenden Ansprüche, wobei eine Rippe der Mehrzahl von Rippen mit einem oder mehreren porösen Bereichen im Inneren der Rippe ausgebildet ist und wobei die Rippe optional eine oder mehrere Perforationen beinhaltet, die sich in den porösen Bereich erstrecken, um einen sekundären Pfad durch die Rippe zu definieren.

4. Wärmetauscher nach einem der vorhergehenden Ansprüche, wobei die Mehrzahl von Rippen in einer Mehrzahl von Reihen angeordnet ist, wobei sich jede Reihe quer zu einer Strömungsrichtung des zweiten Fluids durch die Mehrzahl von zweiten Pfaden erstreckt.

5. Wärmetauscher nach Anspruch 4, wobei eines oder mehrere von einem Rippenabstand und einer Rippendicke zwischen einer ersten Reihe der Mehrzahl von Reihen und einer zweiten Reihe der Mehrzahl von Reihen variiert wird.

6. Wärmetauscher nach einem der vorhergehenden Ansprüche, ferner umfassend einen Turbulator (46), der zwischen benachbarten Rippen der Mehrzahl von Rippen angeordnet ist.

7. Wärmetauscher nach einem der vorhergehenden Ansprüche, wobei die Wärmetauscherplatten aus einem Blechmaterial ausgebildet sind.

8. Wärmetauscher nach einem der vorhergehenden Ansprüche, wobei:
die Mehrzahl von Wärmetauscherplatten eine Mehrzahl von Wärmetauscherschichten entlang der Stapelachse definiert; und
wobei eine erste Wärmetauscherschicht der Mehrzahl von Wärmetauscherschichten die Mehrzahl von Rippen beinhaltet, die durch ein oder mehrere additive Fertigungsverfahren ausgebildet sind; und
wobei eine zweite Wärmetauscherschicht der Mehrzahl von Wärmetauscherschichten eine Mehrzahl von Rippen beinhaltet, die nicht durch ein oder mehrere additive Fertigungsverfahren ausgebildet sind.

9. Verfahren zum Bilden eines Wärmetauschers, umfassend:
Stapeln einer Mehrzahl von Wärmetauscherplatten (14a, 14b) entlang einer Stapelachse, wodurch eine Mehrzahl von ersten Fluidpfaden (18) definiert wird, durch die ein erstes Fluid geleitet wird;
Positionieren einer Mehrzahl von Rippen (26) zwischen benachbarten ersten Fluidpfaden, um zumindest teilweise eine Mehrzahl von zweiten Fluidpfaden (22) zu definieren, durch die ein zweites Fluid geleitet wird;
wobei die Wärmetauscherplatten aus einem Flachmaterial ausgebildet sind; und
wobei die Mehrzahl von Rippen durch ein oder mehrere additive Fertigungsverfahren ausgebildet ist; wobei das Verfahren ferner umfasst:
Bilden einer Mehrzahl von Plattenöffnungen (28) in der Mehrzahl von Wärmetauscherplatten; und
Bilden einer Rippe der Mehrzahl von Rippen derart, dass sie sich in jede der Mehrzahl von Plattenöffnungen erstreckt, um die Mehrzahl von Rippen an der Wärmetauscherplatte zu befestigen.

10. Verfahren nach Anspruch 9, ferner umfassend Variieren einer Rippendicke der Mehrzahl von Rippen entlang einer Rippenhöhenrichtung.

11. Verfahren nach Anspruch 9 oder 10, ferner umfassend Bilden einer Rippe der Mehrzahl von Rippen mit einem oder mehreren porösen Bereichen im Inneren der Rippe, und optional ferner umfassend Bilden der Rippe mit einer oder mehreren Perforationen, die sich in den porösen Bereich erstrecken, um einen sekundären Pfad durch die Rippe zu definieren.

12. Verfahren nach einem der Ansprüche 9-11, ferner umfassend Anordnen der Mehrzahl von Rippen in einer Mehrzahl von Reihen, wobei sich jede Reihe quer zu einer Strömungsrichtung des zweiten Fluids durch die Mehrzahl von zweiten Pfaden erstreckt, und optional ferner umfassend Variieren eines oder mehrerer von einem Rippenabstand und einer Rippendicke zwischen einer ersten Reihe der Mehrzahl von Reihen und einer zweiten Reihe der Mehrzahl von Reihen.

13. Verfahren nach einem der Ansprüche 9-12, wobei das eine oder die mehreren additiven Fertigungsverfahren 3D-Drucken beinhalten.

## Revendications

1. Échangeur de chaleur, comprenant :
une pluralité de plaques d'échangeur de chaleur (14a, 14b) empilées le long d'un axe d'empilement définissant une pluralité de premières voies de passage (18) à travers lesquelles un premier fluide est dirigé ; et
une pluralité d'ailettes (26) disposées entre des premières voies de passage adjacentes de la pluralité de premières voies de passage, la pluralité d'ailettes définissant au moins partiellement une pluralité de secondes voies de passage (22) à travers lesquelles un second fluide est dirigé ;
dans lequel les plaques d'échangeur de chaleur sont formées à partir d'un matériau en feuille ; et
dans lequel la pluralité d'ailettes sont formées par un ou plusieurs processus de fabrication additive ; l'échangeur de chaleur étant **caractérisé par**
une pluralité d'ouvertures de plaques (28) dans la pluralité de plaques d'échangeur de chaleur ;
dans lequel une ailette parmi la pluralité d'ailettes est formée s'étendant dans chacune de la pluralité d'ouvertures de plaque pour fixer la pluralité d'ailettes à la plaque d'échangeur de chaleur.

2. Échangeur de chaleur selon la revendication 1, dans lequel une épaisseur d'ailette de la pluralité d'ailettes varie le long d'une direction de hauteur d'ailette.

3. Échangeur de chaleur selon une quelconque revendication précédente, dans lequel une ailette de la pluralité d'ailettes est formée avec une ou plusieurs zones poreuses internes à l'ailette, et éventuellement dans lequel l'ailette comporte une ou plusieurs perforations s'étendant dans la zone poreuse pour définir une voie de passage secondaire à travers l'ailette.

4. Échangeur de chaleur selon une quelconque revendication précédente, dans lequel la pluralité d'ailettes sont agencées en une pluralité de rangées, chaque rangée s'étendant à travers une direction d'écoulement du second fluide à travers la pluralité de secondes voies de passage.

5. Échangeur de chaleur selon la revendication 4, dans lequel l'un ou plusieurs d'un espacement d'ailette et d'une épaisseur d'ailette varient entre une première rangée de la pluralité de rangées et une seconde rangée de la pluralité de rangées.

6. Échangeur de chaleur selon une quelconque revendication précédente, comprenant en outre un turbulateur (46) disposé entre des ailettes adjacentes de la pluralité d'ailettes.

7. Échangeur de chaleur selon une quelconque revendication précédente, dans lequel les plaques d'échangeur de chaleur sont formées à partir d'un matériau en tôle.

8. Échangeur de chaleur selon une quelconque revendication précédente, dans lequel :
la pluralité de plaques d'échangeur de chaleur définit une pluralité de couches d'échangeur de chaleur le long de l'axe d'empilement ; et
dans lequel une première couche d'échangeur de chaleur parmi la pluralité de couches d'échangeur de chaleur comporte la pluralité d'ailettes formées par un ou plusieurs processus de fabrication additive ; et
dans lequel une seconde couche d'échangeur de chaleur parmi la pluralité de couches d'échangeur de chaleur comporte une pluralité d'ailettes non formées par un ou plusieurs processus de fabrication additive.

9. Procédé de formation d'un échangeur de chaleur, comprenant :
l'empilement d'une pluralité de plaques d'échangeur de chaleur (14a, 14b) le long d'un axe d'empilement définissant de ce fait une pluralité de premières voies de passage de fluide (18) à travers lesquelles un premier fluide est dirigé ;
le positionnement d'une pluralité d'ailettes (26) entre des premières voies de passage de fluide adjacentes pour définir au moins partiellement une pluralité de secondes voies de passage de fluide (22) à travers lesquelles un second fluide est dirigé ;
dans lequel les plaques d'échangeur de chaleur sont formées à partir d'un matériau en feuille ; et
dans lequel la pluralité d'ailettes sont formées par un ou plusieurs processus de fabrication additive ; le procédé comprenant en outre :
la formation d'une pluralité d'ouvertures de plaques (28) dans la pluralité de plaques d'échangeur de chaleur ; et
la formation d'une ailette parmi la pluralité d'ailettes pour s'étendre dans chacune de la pluralité d'ouvertures de plaque pour fixer la pluralité d'ailettes à la plaque d'échangeur de chaleur.

10. Procédé selon la revendication 9, comprenant en outre la variation d'une épaisseur d'ailette de la pluralité d'ailettes le long d'une direction de hauteur d'ailette.

11. Procédé selon la revendication 9 ou 10, comprenant en outre la formation d'une ailette parmi la pluralité d'ailettes avec une ou plusieurs zones poreuses internes à l'ailette, et comprenant en outre éventuellement la formation de l'ailette comportant une ou plusieurs perforations s'étendant dans la zone poreuse pour définir une voie de passage secondaire à travers l'ailette.

12. Procédé selon l'une quelconque des revendications 9 à 11, comprenant en outre l'agencement de la pluralité d'ailettes en une pluralité de rangées, chaque rangée s'étendant à travers une direction d'écoulement du second fluide à travers la pluralité de secondes voies de passage, et comprenant en outre éventuellement la variation d'un ou plusieurs d'un espacement d'ailette et d'une épaisseur d'ailettes entre une première rangée de la pluralité de rangées et une seconde rangée de la pluralité de rangées.

13. Procédé selon l'une quelconque des revendications 9 à 12, dans lequel les un ou plusieurs processus de fabrication additive comporte une impression 3D.
